# EUROPEAN PATENT APPLICATION

(11) **EP 4 512 540 A1**
(43) Date of publication of application: **26.02.2025**
(21) Application number: 23790920.5
(22) Date of filing: 10.03.2023
(51) Int. Cl.: B07C 5/34, B07C 5/36

(54) **MATERIAL SORTING SYSTEM AND SORTING METHOD**

(30) Priority: 19.04.2022 CN 202210413249
(71) Applicant: NUCTECH COMPANY LIMITED, Beijing 100084 (CN); Nuctech Technology (Jiangsu) Co., Ltd., Jintan District Changzhou Jiangsu 213200 (CN)
(72) Inventor: LI, Yuanjing, Beijing 100084 (CN); SUN, Shangmin, Beijing 100084 (CN); ZHANG, Junbin, Beijing 100084 (CN); ZONG, Chunguang, Beijing 100084 (CN); DANG, Yongle, Beijing 100084 (CN); LIU, Lei, Beijing 100084 (CN); LIU, Bicheng, Beijing 100084 (CN); YU, Weifeng, Beijing 100084 (CN)
(74) Representative: Isarpatent
(86) International application number: PCT/CN2023/080755
(87) International publication number: WO 2023/202259

(57) **Abstract**

A material separation system and a material separation method. The material separation system includes: a distribution device (100) configured to convey a material; an identification device (200) including an X-ray detection module (40) and a three-dimensional image acquisition module (50), the X-ray detection module (40) being configured to acquire a first image of the material on the distribution device (100), and the three-dimensional image acquisition module (50) being configured to acquire a second image of the material on the distribution device (100); a control device (600) configured to acquire a material category of the material based on the first image, acquire the center of mass of the material based on the first image and the second image, and acquire a time instant at which the material reaches a blowing position corresponding to a separation device (300) based on the center of mass of the material; the separation device (300) located downstream of the material distribution device (100) and configured to blow towards the center of mass of the material at the blowing position to achieve material separating; and a material receiving device (400) configured to accommodate a separated material.

## Description

### CROSS-REFERENCE TO RELATED APPLICATION

This application claims the benefit of priority to Chinese Patent Application No. 202210413249.X, filed with China National Intellectual Property Administration on April 19, 2022, entitled "MATERIAL SEPARATION SYSTEM AND MATERIAL SEPARATION METHOD", the entire contents of which are incorporated herein by reference.

### TECHNICAL FIELD

The present disclosure generally relates to a technical field of material separating, and in particular to a material separation system and a material separation method applicable to wide channels.

### BACKGROUND

As dry separating of coal has gained more and more attention, intelligent dry separating technology has emerged, which is an intelligent automatic separating technology for coal gangue based on X-ray, spectral analysis, or image identification. Intelligent dry separating technology has the advantages of no water use, simple process, low investment, and low production cost.

In the intelligent separating process, an X-ray detection device is usually used to identify categories, shapes and dimensions of minerals. In the subsequent separating process, different categories of minerals are blown with air nozzles having different blowing strengths for separating. In practice, the shapes and the dimensions of minerals identified by the X-ray detection device are directly related to blowing strengths.

However, the X-ray machine of the X-ray detection device has a fixed opening angle, that is, a beam output range of the X-ray machine is fixed. Therefore, in a case that a distance between a target point and a surface of a conveyor belt is fixed, the larger the width of the conveyor, the smaller an angle between the target point and an edge of the conveyor belt. If the angle between the target point and the edge of the conveyor belt is reduced, the X-rays will penetrate a mineral block obliquely, thus a length of the X-ray penetration path will increase and an imaging area of the mineral block on the detector will increase. In addition, the farther away the mineral block is from the target point, the larger the imaging area of the mineral block becomes, resulting in a significant increase in gas consumption in the blowing process. Moreover, the separating accuracy will be greatly reduced due to the reduction in the accuracy of mineral shape identification.

For a mineral separating system with a wide channel, the related art, such as CN109821766A, discloses a technical solution in which two X-ray identification devices are provided above the conveyor belt, and detection images of the respective X-ray identification devices are spliced. However, it is difficult to design a scanning device adopting such dual-light source solution, the debugging complexity thereof is increased, and the cost is high, which is uneconomical.

### SUMMARY

In view of the above defects or shortcomings in the related art, it is desired to provide a material separation system and a material separation method that are applicable to wide channels, so as to reduce the energy consumption of the separating system and improve the separating effect.

In a first aspect, the present disclosure provides a material separation system, including: a material distribution device configured to convey a material; an identification device including an X-ray detection module and a three-dimensional image acquisition module, the X-ray detection module being configured to acquire a first image of the material on the material distribution device, and the three-dimensional image acquisition module being configured to acquire a second image of the material on the material distribution device; a control device configured to acquire a material category of the material based on the first image, acquire a center of mass of the material based on the first image and the second image, and acquire a time instant at which the material reaches a blowing position corresponding to a separation device based on the center of mass of the material; the separation device located downstream of the material distribution device and configured to blow towards the center of mass of the material at the blowing position so as to achieve material separating; and a material receiving device configured to accommodate a separated material.

Optionally, the separation device includes a plurality of blowing valves located below a movement trajectory of the material, and each of the plurality of blowing valves includes a plurality of nozzles arranged in a width direction of the material distribution device.

Optionally, the control device is further configured to perform at least one selected from: acquiring a shape of the material based on the second image; acquiring a density of the material based on the first image, and acquiring the center of mass of the material based on the shape of the material and the density of the material; acquiring the movement trajectory of the material based on the center of mass of the material; acquiring the time instant at which the material reaches the blowing position for the separation device based on the movement trajectory of the material; sending a time instant to start blowing to the separation device based on the time instant at which the material reaches the blowing position for the separation device; selecting a blowing valve of the separation device for blowing the material based on the material category; and selecting a nozzle of the blowing valve for blowing the material based on the shape of the material.

Optionally, the X-ray detection module and the three-dimensional image acquisition module are arranged in a same width direction of the material distribution device.

Optionally, the X-ray detection module includes an X-ray emission source arranged above the material distribution device and an X-ray detector arranged below the material distribution device.

Optionally, the three-dimensional image acquisition module includes two line laser binocular stereo cameras arranged above the material distribution device and in a width direction of the material distribution device.

Optionally, viewing angle coverage regions of the two line laser binocular stereo cameras on the material distribution device partially overlap with each other, and identification regions of the two line laser binocular stereo cameras on the material distribution device do not overlap with each other.

Optionally, a viewing angle range of each of the two line laser binocular stereo camera ranges from 75 ° to 90 °.

Optionally, the separation device includes a first blowing valve and a second blowing valve, and the first blowing valve and the second blowing valve are configured to separate the material into at least three categories of materials.

Optionally, a first blowing position on the movement trajectory of the material corresponding to the first blowing valve overlaps with a second blowing position on the movement trajectory of the material corresponding to the second blowing valve.

Optionally, the material receiving device includes a first chute close to the material distribution device, a second chute in the middle, and a third chute away from the material distribution device.

In a second aspect, the present disclosure provides a material separation method performed by any one the above systems. The method includes: acquiring the first image of the material on the material distribution device by the X-ray detection module, and acquiring the second image of the material by the three-dimensional image acquisition module, when conveying the material; acquiring, by the control device, the material category of the material based on the first image, acquiring the center of mass of the material based on the first image and the second image, and acquiring the time instant at which the material reaches the blowing position corresponding to the separation device based on the center of mass of the material; and blowing towards the center of mass of the material by the separation device so as to achieve material separating, in response to the material falling from the material distribution device to the blowing position corresponding to the separation device.

The technical solutions provided in embodiments of the present disclosure may have the following beneficial effects.

According to the material separation system provided in embodiments of the present disclosure, the category of the material is acquired by the X-ray detection module, the center of mass of the material is acquired based on the X-ray detection module and the three-dimensional image acquisition module, the separation device blows towards the center of mass of the material when blowing, the material separation system is applicable to material separating for a wide channel, so as to solve the problem caused by the increase in the channel width of the material separation system in related art, improve the accuracy of material separating, and reduce the energy consumption of the separating system.

### BRIEF DESCRIPTION OF THE DRAWINGS

Other features, objectives and advantages of the present disclosure will become clear from the detailed description of the non-limiting embodiments made with reference to the following drawings:
FIG. 1 shows a schematic structural diagram of a material separation system provided in an embodiment of the present disclosure;
FIG. 2 shows a top view of a material separation system provided in an embodiment of the present disclosure;
FIG. 3 shows a side view of a material separation system provided in an embodiment of the present disclosure;
FIG. 4 shows schematic diagrams respectively showing blowing positions in the related art and blowing positions in the present disclosure;
FIG. 5 shows schematic diagrams of forces exerted on a material blown by a first blowing valve and a second blowing valve respectively in an embodiment of the present disclosure;
FIG. 6 shows a schematic structural diagram of a blowing device provided in an embodiment of the present disclosure;
FIG. 7 shows a schematic structural diagram of another material separation system for separating three categories of products provided in an embodiment of the present disclosure; and
FIG. 8 shows a flowchart of a material separation method provided in an embodiment of the present disclosure.

### DETAILED DESCRIPTION OF EMBODIMENTS

The present disclosure is further described in detail below in conjunction with accompanying drawings and embodiments. It will be understood that the specific embodiments described herein are only used to explain the present disclosure, but not to limit the present disclosure. In addition, it should be noted that, for convenience of description, only the parts related to the present disclosure are shown in the drawings.

It should be noted that, as long as there is no conflict, embodiments of the present disclosure and features in embodiments may be combined with each other. The present disclosure will be described in detail below with reference to the accompanying drawings and in conjunction with embodiments.

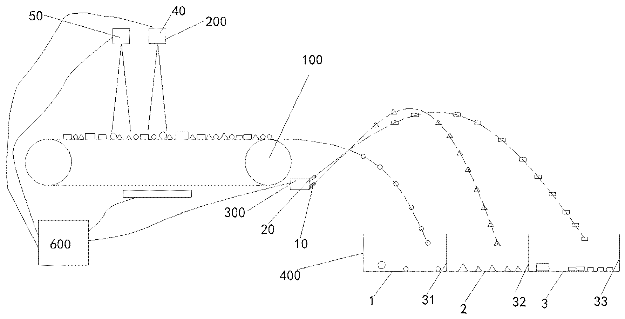

Referring to FIGS. 1 to 3 for details, a material separation system includes: a material distribution device 100 used to convey a material; an identification device 200 including an X-ray detection module 40 and a three-dimensional image acquisition module 50, the X-ray detection module 40 being used to acquire a first image of the material on the material distribution device 100, and the three-dimensional image acquisition module 50 being used to acquire a second image of the material on the material distribution device 100; a control device 600 used to acquire a material category of the material based on the first image, acquire a center of mass of the material based on the first image and the second image, and acquire a time instant at which the material reaches a blowing position corresponding to a separation device 300 based on the center of mass of the material; the separation device 300 located downstream of the material distribution device 100 and used to blow towards the center of mass of the material at the blowing position so as to achieve material separating; and a material receiving device 400 used to accommodate a separated material.

In embodiments of the present disclosure, The material separation system applicable to a wide channel is provided to solve the problems of reduced detection accuracy and increased blowing energy consumption caused by an increase in the channel width of the material separation system in the related art. FIG. 4 shows schematic diagrams of blowing positions in the related art and blowing positions in the present disclosure . FIG. 4(a) shows a schematic diagram of blowing positions for a material in the related art, and FIG. 4(b) shows a schematic diagram of blowing positions for a material in the present disclosure.

For example, for a round material, the shape of the material identified by the X-ray identification device in the related art is roughly elliptical, and the closer the material is to an edge of the conveyor belt, the greater the ellipticity of the material, as shown in FIG. 4(a). When the separation device blows the material, a nozzle corresponding to the elliptical material is selected for blowing. While, the shape of the material identified by the material separation system provided in the present disclosure is round, as shown in FIG. 4(b). When the separation device 300 blows the material, a nozzle corresponding to the round material is selected for blowing. It may be understood that for materials of other shapes, the material separation system provided in the present disclosure may identify the shapes of the materials more accurately than the material separation system in the related art.

In the related art, the blowing is performed only based on identification results of the material category and the shape of the material acquired based on the first image. Therefore, even if more than two parallel X-ray identification devices are used, there are still issues with the accuracy of identifying the shape of the material on the conveyor belt, especially for the material at an edge of the conveyor belt, which causes the identified shape of the material to be deformed, and in turn leads to an excessive blowing range in the blowing process. In contrast, in the present disclosure, as a shape identification result acquired based on the second image is used, the identification accuracy is increased, and the shape of the material is the same or approximately the same as the actual shape of the material. When the blowing is performed, a nozzle corresponding to the shape of the material is selected for blowing, thereby improving the blowing accuracy. In addition, the method of blowing towards the center of mass of the material is used to effectively control the material separating path, so that the separating accuracy is improved, and incorrect separating may be prevented.

It should be noted that for conveyor belts with different widths, the problem of low accuracy in material shape identification may occur due to different mounting heights of X-ray emission sources. Generally, the X-ray emission source is mounted above the material conveyor belt. The higher the mounting height of the X-ray emission source, the wider the detection range. However, the ray intensity attenuates as the height increases, which will lead to a decrease in the detection accuracy. The material separation system provided in the present disclosure is not limited to the case of wide channels, but may also be applied to other application scenarios to improve the separating accuracy.

In embodiments of the present disclosure, the material separation system may be applied to mineral separating, food separating, garbage separating, etc. Material information of the material to be separated is identified by the identification device, the material is classified into a plurality of categories of materials based on the material information, and different categories of materials are separated by the separation device.

It should be noted that in embodiments of the present disclosure, the material may be classified into a plurality of categories of materials based on the material information. In specific classification, the material may be classified in different methods according to different separating requirements. The material may be classified according to the shape and size, the density, the substance content or the like, which is not limited in the present disclosure.

For example, minerals may be classified into metallic minerals and non-metallic minerals. Metallic minerals include ferrous metals such as iron, manganese, chromium, etc., and non-ferrous metals such as copper, lead, zinc, aluminum, tin, molybdenum, nickel, antimony, tungsten, etc. Non-metallic minerals include most oxy salt minerals and some oxide and halide minerals, such as diamond, crystal, Iceland spar, boron, tourmaline, mica, topaz, corundum, graphite, gypsum, asbestos, and fuel minerals.

In practice, the material distribution device 100 may be one of or a combination of more than one selected from a horizontal conveyor belt, an inclined conveyor belt, and a sliding plate arranged at an angle. Materials of different types and different particle sizes are distributed on the material distribution device 100 in length and width directions of the material distribution device 100. As the conveyor belt operates at a certain speed, and different materials are scattered on the conveyor belt, when the materials are transported by the conveyor belt to an end position of the conveyor belt, the materials are thrown out from the conveyor belt for flat throwing motion.

It should be noted that in embodiments, the horizontal conveyor belt is taken as an example for illustration. In other embodiments, different forms of material distribution devices may be selected according to different application scenarios.

The identification device 200 includes an X-ray detection module 40 and a three-dimensional image acquisition module 50, and is used to acquire the material information. For example, the X-ray detection module may be used to acquire the category, the dimension, the shape, the particle size, the density, etc. of the material; and the three-dimensional image acquisition module may be used to acquire information related to the shape of the material, such as the dimension and the particle size.

As shown in FIG. 3, the X-ray detection module 40 includes an X-ray emission source 41 arranged above the material distribution device 100 and an X-ray detector 42 arranged below the material distribution device 100.

In practice, the X-ray emission source 41 emits X-rays to irradiate the material, the X-ray detector 42 receives X-rays attenuated by passing through the material, converts the attenuated X-rays into a digital signal and transmits the digital signal to the control device 600, and the control device 600 performs image denoising, sharpening, coloring and other processing based on the digital signal acquired by the X-ray detection module 40 to generate the first image. In the present disclosure, the first image is used in acquisition of the category information of the material.

The three-dimensional image acquisition module 50 includes two line laser binocular stereo cameras located above the material distribution device 100 and arranged in the width direction of the material distribution device 100. In practice, the three-dimensional image acquisition module 50 is used to acquire 3D-point cloud data of the material and transmit the 3D-point cloud data to the control device 600. The control device 600 generates the second image based on the 3D-point cloud data acquired by the three-dimensional image acquisition module 50. The second image may be used in acquisition of the shape information of the material.

Optionally, viewing angle coverage regions of the two line laser binocular stereo cameras on the material distribution device partially overlap with each other, and identification regions of the two line laser binocular stereo cameras on the material distribution device do not overlap with each other. For example, a viewing angle of the line laser binocular stereo camera ranges from 75 ° to 90 °.

It should be noted that in the present disclosure, the viewing angle coverage region refers to a region defined by a three-dimensional beam or an X-ray beam on an incident surface (the material distribution device), and the identification region refers to a region defined by the identification device 200 for target image detection within the viewing angle coverage region. In this embodiment, the viewing angle coverage region of the X-ray detection module 40 includes at least a boundary on the material distribution device, and the viewing angle coverage region of the three-dimensional image acquisition module 50 includes a boundary of the material distribution device. As the three-dimensional image acquisition module 50 in the present disclosure includes two line laser binocular stereo cameras, the identification region of each line laser binocular stereo camera may use the center line of the material distribution device as a boundary.

In an embodiment, the X-ray detection module 40 and the three-dimensional image acquisition module 50 are arranged in the same width direction of the material distribution device. When acquiring the first image and the second image, shooting may be performed at the same time. In this way, the shape data collected by the three-dimensional image acquisition module 50 may be matched with the category information data acquired by the X-ray detection module 40. However, the present disclosure is not limited to this. In different application scenarios, the X-ray detection module and the three-dimensional image acquisition module may be arranged at different positions of the material distribution device. When acquiring the images, as the conveyor belt operates at a constant speed, a time difference between a time instant at which the three-dimensional capturing is performed for the material and a time instant at which the X-ray scanning is performed for the material is fixed, and the time difference may be used to shoot or search for matching.

It should be noted that in embodiments of the present disclosure, the mounting height of the X-ray detection module and the mounting height of the three-dimensional image acquisition module may be adjusted based on the width, the viewing angle range and the like of the material distribution device. For example, the mounting height of the line laser binocular stereo camera is in a range of 1.0 m to 1.5 m, a mounting distance between the two line laser binocular stereo cameras is in a range of 1.0 m to 1.5 m, a width of the viewing angle coverage region is in a range of 1.5 m to 1.8 m; the mounting height of the X-ray emission source 41 is in a range of 1.0 m to 1.8 m.

In embodiments of the present disclosure, the control device 600 is further used to perform at least one selected from the following operations S01 to S05.

In S01, the shape of the material is acquired based on the second image.

In S02, the density of the material is acquired based on the first image, and the center of mass of the material is acquired based on the shape and the density of the material.

In S03, a movement trajectory of the material is acquired based on the center of mass; a time instant at which the material reaches a blowing position for the separation device is acquired based on the movement trajectory; and a time instant to start blowing is sent to the separation device based on the time instant at which the material reaches the blowing position for the separation device.

In S04, a blowing valve of the separation device for blowing the material is selected based on the material category.

In S05, a nozzle of the blowing valve for blowing the material is selected based on the shape of the material.

In the operation S01 performed by the control device 600, the shape of the material may be identified based on both the first image and the second image. Usually, the X-ray emission source emits radiation (X-rays) to form a radiation beam with more concentrated energy and angle, and then the X-rays are incident on the material and penetrates the material to enter the X-ray detector. The radiation passing through the material is absorbed and scattered, causing the radiation energy to attenuate. Radiation with different degrees of attenuation is capable of reflecting different conditions of different components in the material. Therefore, the radiation passing through the material carries a lot of information inside the material.

As the radiation beam emitted from the emission source is incident on the material and then on the X-ray image detector at a divergent angle, a focus bombarded by one electron develops into a radiation surface in the emission and the irradiation of the X-rays. Each X-ray is radiated in a divergent manner.

The angle at which each X-ray photon finally enters the X-ray image detector is different. For the image acquired by the X-ray image detector, the brightness and the resolution of the image gradually changes from the middle of the image to the edge of the image, causing the acquired image to be distorted at the edge of the detector. For example, for a cuboid, the attenuation degree of the X-rays incident vertically from a long side of the cuboid is different from the attenuation degree of the X-rays incident vertically from a short side of the cuboid; for the same object, a penetration path of the X-rays in a case of the object being at the edge of the conveyor belt is usually longer than a penetration path of the X-rays in a case of the object being in the center of the conveyor belt, causing the acquired shape of the material to be inaccurate. Therefore, it will be understood that the shape acquired only based on the first image from the existing X-ray detection module is usually not completely consistent with the actual shape of the material, and the closer the material is to the edge of the conveyor belt, the more pronounced the shape inconsistency becomes.

In embodiments of the present disclosure, the high imaging resolution and the high shape feature accuracy of three-dimensional images are used to improve the accuracy of the acquired shape of the material. For example, the three-dimensional image acquisition module 50 includes a 3D camera, which may provide clearer image details. The image imaging resolution is higher, and richer color, shape and texture information may be acquired. Therefore, when the shape of the material is acquired, making full use of the object feature information acquired from the optical image may effectively improve the contrast ratio of the object in the image and reduce errors and uncertainties in object interpretation and object identification.

For example, performing the operation S01 may include performing the following operations S11, S12 and S13.

In S11, the second image is preprocessed.

For example, Gaussian smoothing filtering is used to remove noise, and grayscale linear transformation is used to enhance the contrast ratio of a region to be detected.

In S12, image clustering is used to segment and extract a material region in the second image, so as to obtain a second material region image.

For example, a histogram calculation is performed on the image information, the number of peak points in the histogram is set to the number of clustering categories, and for the maximum value of the cluster centroid and the number of clustering categories, iteration is performed until the maximum value is less than a predetermined threshold or the maximum number of iterations has been reached so that the iteration is stopped. The classification result is output, and interference points are removed from the output result, so as to make the segmentation result more accurate.

In S13, a shape function of the material is acquired based on the second material region image. It should be noted that in embodiments of the present disclosure, the image processing method for the generated first image and second image may be performed using various image processing methods in the related art. For example, computer vision, computer graphics, digital image processing and other methods are used to segment, analyze, transform and extract the image, so as to achieve related functions. Alternatively, it is possible to use AI algorithms, such as machine learning and deep learning (neural networks), to construct a physical statistical model, and image signal samples are continuously input into the model for training and evaluation until a model which is capable of efficiently and accurately identifying a given object is acquired. It is also possible to combine various methods to improve the identification performance and the identification efficiency. The present disclosure does not limit this.

In the operation S02 performed by the control device 600, the control device 600 may determine the density of the material based on the acquired first image, determine the material category based on the density of the material, and determine the center of mass of the material based on the density and the shape of the material. Moreover, the control device 600 may directly determine the material category based on other information (such as the atomic number) of the first image. When determining the center of mass of the material, the first image and the second image may be corrected or synthesized to generate a fitting image, and the fitting image may be used for determining the center of mass of the material. However, embodiments of the present disclosure are not limited to this, and other methods in the related art may be used to acquire the center of mass, such as machine learning, deep learning, etc.

In the image processing, clustering is widely used in image segmentation due to characteristics of no sample set, no supervision, and the ability to achieve multi-region segmentation. For materials (such as minerals), internal components thereof are reflected as features with different grayscales in an X-ray image, and using clustering may achieve better image segmentation and other effects.

For example, the method for acquiring density and the center of mass using clustering-based image segmentation includes the following operations S21 to S24.

In S21, the first image to be detected is preprocessed.

For example, Gaussian smoothing filtering is used to remove noise, and grayscale linear transformation is used to enhance the contrast ratio of a region to be detected.

In S22, image clustering is used to segment and extract a material region in the first image to obtain a first material region image.

For example, a histogram calculation is performed on the image information, the number of peak points in the histogram is set to the number of clustering categories, and for the maximum value of the cluster centroid and the number of clustering categories, iteration is performed until the maximum value is less than a predetermined threshold or the maximum number of iterations has been reached so that the iteration is stopped. The classification result is output, and interference points are removed from the output result, so as to make the segmentation result more accurate.

In S23, pixels are extracted from the first material region image and serve as an input of clustering for classification, and density estimation is performed on discrete pixels after the clustering, so as to obtain a density function.

In S24, the center of mass of the material is acquired using the shape function acquired in step S13 and the density function.

In embodiments of the present disclosure, the center of mass is calculated using the shape of the material acquired based on the first image and the density of the material acquired based on the second image, which may improve the accuracy of the subsequent calculation of a movement trajectory of the material. As such, it is possible to prevent a decrease in the accuracy of the blowing position in the subsequent blowing process caused by a deviation in the calculation of the movement trajectory, thereby improving the separating accuracy.

In the operation S03 performed by the control device 600, the movement trajectory of the material in the present disclosure refers to a movement trajectory of the material thrown out from the material distribution device, and the movement trajectory is substantially in a shape of a flat throwing line. The center of mass, also referred to as "centroid", refers to an imaginary point of a material system, where the mass is considered to be concentrated at the imaginary point. The product of the mass of the particle system and the acceleration of the center of mass is always equal to the vector sum of all external forces applying to the particle system, which is called the center-of-mass motion theorem of the particle system. The motion of the center of mass of the particle system is the same as a motion of a particle located at the center of mass, the mass of that particle is equal to the total mass of the particle system, and a force applied to that particle is equal to all external forces applied to the particle system that translate to that particle.

According to the center-of-mass motion theorem, an internal force of the particle system does not affect the motion of the center of mass of the particle system. For example, after the material is thrown from the material distribution device, no matter what action the material takes in the air or what posture the material takes, as the external force (gravity) does not change, the center of mass of the material still moves along a trajectory of the flat throwing line before the material enters the chute. If a vector sum of the external forces applied to the particle system is always zero, the center of mass of the particle system moves in a straight line at a uniform speed or remains stationary. If the projection of the vector sum of the external forces applied to the particle system on an axis is always zero, then the coordinate of the center of mass of the particle system on this axis changes at a uniform speed or remains unchanged.

Due to different shapes, areas or weights of the materials, movement trajectories of different materials are actually different. Therefore, if the movement trajectory is calculated based on only the shape, the area or the weight, the calculated movement trajectory of the material when the material reaches the blowing position may deviate from the actual movement trajectory of the material. In the present disclosure, as the movement trajectory of the material is calculated using the center of mass, it is possible to improve the accuracy of material blowing and prevent incorrect material separating. In the present disclosure, the time instant at which the material reaches the blowing position for the separation device may be accurately acquired using the movement trajectory of the material. The control device 600 sends the time instant to start blowing to the separation device based on the time instant at which the material reaches the blowing position, thereby achieving precise blowing of the material. The movement trajectory of the material acquired by calculating the center of mass is more accurate than the movement trajectory of the material acquired only based on the category and the shape in the related art. Especially for materials with uneven density, the separating accuracy is improved.

In the operation S04 performed by the control device 600, different blowing methods are applied to different categories of materials, so as to achieve the separating of various materials.

The separation device 300 includes a plurality of blowing valves located below the movement trajectory of the material, and each blowing valve includes a plurality of nozzles arranged in the width direction of the material distribution device 100. The blowing valve is used to blow the material from bottom to top based on the material category, and the nozzle is used to perform selective blowing based on the shape of the material.

When performing classification on the material, the classification is performed according to a type of metal contained in the material, a grade of the material, and chemical compositions in the material, etc. In the following embodiments of the present disclosure, the case where the material separation system includes two blowing valves (a first blowing valve 10 and a second blowing valve 20) and mineral products are classified into three categories (such as high-grade minerals, medium-grade minerals, and low-grade minerals) is taken as an example for illustration. For example, based on the iron content, iron ore includes three categories of materials: siderite, hematite and magnetite. The density of siderite ranges from 3.8 g/cm³ to 3.9 g/cm³, the density of hematite ranges from 3.4 g/cm³ to 4.4 g/cm³, and the density of magnetite ranges from 4.9 g/cm³ to 5.2 g/cm³. As such, one or two of the three categories of materials are identified using the identification device 200 (e.g., based on grayscale values of the X-ray image). In embodiments of the present disclosure, the separation device 300 includes at least the first blowing valve 10 and the second blowing valve 20. The first blowing valve 10 and the second blowing valve 20 are used to separate the material into at least three categories of materials. For example, five blowing valves may be used to separate six categories of materials. In the separating process, different blowing pressures are applied to the materials based on the shapes of the materials. In embodiments of the present disclosure, the separation device 300 including the first blowing valve 10 and the second blowing valve 20 for separating three categories of materials is taken as an example for illustration.

It is worth noting that in embodiments of the present disclosure, the separation device 300 is located below the movement trajectory of the material. By providing the separation device 300 below the movement trajectory, a blowing force may be applied to the material toward the direction in which the material moves, thereby reducing the energy consumption while increasing the effect of different elevation angles on the separating accuracy, so as to improve the separating accuracy. In the present disclosure, the elevation angle of the blowing valve refers to an angle between the blowing angle of the blowing valve and the horizontal direction.

It is well known in the art that the greater the blowing pressure of the blowing valve, the farther the material is blown. However, in the blowing process, the farther the material is blown, the more uncontrollable factors (such as wind resistance, an impact force with a chute) there are in the movement of the material. In embodiments of the present disclosure, the design of the structure of the blowing valve is improved without increasing the blowing pressure per unit area, so that the separating effect on different materials may be improved under the blowing of the blowing valves at different angles.

In the present disclosure, three categories of materials may be separated with the first blowing valve 10 and the second blowing valve 20. As designed, the three categories of materials may be accommodated by three chutes of the material receiving device 400.

In practice, the chutes include a first chute 1 close to the material distribution device 100, a second chute 2 in the middle, and a third chute 3 away from the material distribution device 100. The first blowing valve 10 is used to blow a material so that the material enters the second chute 2; the second blowing valve 20 is used to blow a material so that the material enters the third chute 3; and a material not blown by any blowing valve enters the first chute 1.

When a material identified as siderite by the identification device 200 is thrown out from the material distribution device 100, the separation device 300 controls the first blowing valve 10 to blow the siderite so that the siderite enters the second chute 2. When a material identified as hematite by the identification device 200 is thrown out from the material distribution device 100, the separation device 300 controls the second blowing valve 10 to blow the hematite so that the hematite enters the third chute 3. When a material identified as magnetite by the identification device 200 is thrown out from the material distribution device 100, the magnetite is not blown by any blowing valve and enters the first chute 1 after performing the flat throwing motion.

In embodiments of the present disclosure, the first blowing valve 10 and the second blowing valve 20 are located below the movement trajectory of the material, and the material is blown from bottom to top. A material of a second category is blown by the first blowing valve 10, and after the material of the second category is thrown up from bottom to top, it continues to rise from the blowing point to a highest point and then falls. A material of a third category is blown by the second blowing valve 20, and the material of the third category continues to rise from the blowing point to a highest point and then falls. It will be understood that after the material of the second category and the material of the third category are blown by the blowing valves, their respective trajectories of flat throwing motions change.

As shown in FIG. 5, it is assumed that the material of the second category and the material of the third category have the same performances and characteristics, for example, they have the same weight, the same volume, etc., except for their categories. If the first blowing force F1 and the second blowing force F2 are the same, the material of the second category is subjected to an upward component force F1sinα1, and the material of the third category is subjected to an upward component force F2sinα2. Here, α1 is an elevation angle of the first blowing valve 10, α2 is an elevation angle of the second blowing valve 20, and α1 > α2. As sinα1 > sinα2, the upward component force on the material of the second category is greater than the upward component force on the material of the third category, and the material of the second category moves upward higher than the material of the third category. The lateral component force on the material of the second category is F1cosα1, and the lateral component force on the material of the third category is F2cosα2. The forward component force on the material of the third category is greater than the forward component force on the material of the second category, thus the material of the third category is thrown further away.

In embodiments of the present disclosure, the elevation angle of the first blowing valve 10 is set to be greater than the elevation angle of the second blowing valve 20. On the one hand, as the elevation angle of the second blowing valve 20 is reduced, the second blowing valve 20 may blow the material of the third category further horizontally; on the other hand, as the elevation angle of the first blowing valve 10 is increased, the first blowing valve 10 may blow the material of the first category higher vertically. In this way, the angle between the movement trajectory of the material of the second category and a partition of the second chute 2 on a side of the second chute 2 away from the material distribution device (or a back of an auxiliary separation device 500 on the partition) is reduced, and the material of the second category is substantially vertically thrown into the opening of the second chute 2, so that the horizontal distance of the second chute 2 may be effectively reduced, that is, the dimension of the second chute 2 is effectively reduced, and the separating accuracy of the material of the second category is increased.

In embodiments of the present disclosure, a difference between the elevation angle of the first blowing valve 10 and the elevation angle of the second blowing valve 20 ranges from 5 ° to 30 °. Preferably, the elevation angle of the first blowing valve 10 ranges from 40 ° to 60 °, and the elevation angle of the second blowing valve 20 ranges from 20 ° to 40 °. More preferably, the elevation angle of the first blowing valve 10 is 45 °, and the elevation angle of the second blowing valve 20 is 37 °. It should be noted that in embodiments of the present disclosure, the separating of the material of the second category and the material of the third category are improved by employing the first nozzle valve 10 and the second nozzle valve 20 with different elevation angles. Therefore, the first blowing valve 10 and the second blowing valve 20 may employ air nozzles of the same specification and the same model, and may be matched with high-frequency solenoid valves of the same specification and the same model. Moreover, it is not necessary to control the blowing strength of the first blowing valve 10 and the blowing strength of the second blowing valve 20, so as to significantly reduce a device cost and a control cost.

In addition, ores are subjected to significantly different resistances due to different shapes, areas or weights of the ores. In the separating process, the resistance is usually ignored or assumed to be a fixed value. If a resistance is calculated, as there are many factors that affect the resistance, it will lead to significant differences in the final calculated values of the resistance. In this case, a deviation of the movement trajectory may be caused, and as time goes by, the deviation becomes larger, resulting in a decrease in the accuracy of the blowing position in the subsequent blowing process. Therefore, it is necessary to control the blowing strength accurately. When the performance of the blowing mechanism decreases or the air supply pressure fluctuates, the blown material is likely to enter other separating regions, causing incorrect separating of the material and reducing the accuracy of material separating.

In embodiments of the present disclosure, in order to further solve the blowing accuracy problem, the blowing position of the first blowing valve 10 and the blowing position of the second blowing valve 20 are set at a front end position of the trajectory of the material in the flat throwing motion after the material is thrown out from the material distribution device 100. The blowing positions of the two blowing valves for the material overlap or nearly overlap with each other. The closer the blowing position is to the front end position, the smaller the variable of the movement trajectory. Therefore, the accuracy is improved when the material reaches the blowing position of the first blowing valve 10 and the blowing position of the second blowing valve 20, so that the accuracy of material separating is improved.

For example, the separation device 300 is located on a lower side of a discharge end of the material distribution device 100, and the blowing position of the first blowing valve 10 and the blowing position of the second blowing valve 20 correspond to a position where the material was just thrown out from the material distribution device 100.

In an embodiment of the present disclosure, the first blowing position on the movement trajectory of the material corresponding to the first blowing valve 10 overlaps with the second blowing position on the movement trajectory of the material corresponding to the second blowing valve 20. At this point, as the elevation angle of the first blowing valve 10 is greater than that of the second blowing valve 20, the first blowing valve 10 is arranged on a side of the second blowing valve 20 away from the material distribution device 100.

It should be noted that in embodiments of the present disclosure, the blowing positions of the first blowing valve 10 and the second blowing valve 20 are preferably arranged as close as possible to the starting point of the movement trajectory of the material. In some other embodiments, the blowing position of the first blowing valve 10 and the blowing position of the second blowing valve 20 may be set at positions close to each other. When setting the blowing positions, a blowing trajectory from the first blowing valve 10 to the first blowing position on the movement trajectory and a blowing trajectory from the second blowing valve 20 to the second blowing position on the movement trajectory do not intersect on a lower side of the movement trajectory. In this way, it is possible to prevent airflows of the first blowing valve 10 and the second blowing valve 20 from intersecting when the two blowing valves blow at the same time, so as to prevent the impact of the blowing force on the material. When the blowing position for the first blowing valve 10 and the blowing position for the second blowing valve 20 are close to each other, the first blowing valve 10 may be arranged on a side of the second blowing valve 20 facing the material distribution device 100, that is, the first blowing valve 10 is arranged at a height greater than a height at which the second blowing valve 20 is arranged.

In the operation S05 performed by the control device 600, due to different classification methods for material categories, there may be various materials with different shapes, areas or weights in the same category of materials. In this case, if the same blowing pressure is employed, incorrect separating may be caused. In the present disclosure, the blowing pressure of the blowing valve is adjusted by adjusting positions and the number of the nozzles based on the acquired shape of the material.

Optionally, the first blowing valve 10 includes a plurality of first nozzles arranged in an array in the width direction of the material distribution device 100, and the second blowing valve 20 includes a plurality of second nozzles arranged in an array in the width direction of the material distribution device 100. In embodiments of the present disclosure, the blowing position of the first blowing valve 10 is close to the blowing position of the second blowing valve 20. On this basis, in the configuration process, the first blowing valve 10 and the second blowing valve 20 may employ the same air supply device and be arranged on the same blowing device.

In the configuration process, as shown in FIG. 6, the blowing device includes two rows of nozzles arranged in parallel, and the array direction of the nozzles is the width direction of the material distribution device 100. In the present disclosure, the first nozzle 11 is located on a lower side, and the second nozzle 21 is located on an upper side. The elevation angle of the first nozzle 11 is 45 °, and the elevation angle of the second nozzle 21 is 37 °. The arrangements of the first nozzle 11 and the second nozzle 21 may refer to the description of the first blowing valve 10 and the second blowing valve 20, which will not be described in detail one by one in the present disclosure.

A solenoid valve connected to an air supply device (not shown) may be provided on each nozzle in the blowing device. The solenoid valve may be a high-frequency solenoid valve. Each nozzle is connected to the air supply device through the solenoid valve. The air supply device is filled with compressed gas serving as a gas source for the nozzle to blow different categories of materials.

In embodiments of the present disclosure, a plurality of first nozzles 11 and a plurality of second nozzles 21 are provided. For the materials of different shapes (such as different dimensions or different particle sizes), the blowing pressure may be controlled by adjusting the number of the first nozzles 11 and the number of the second nozzles 21. For example, when the area of the material is large, a large number of nozzles may be used to blow the material surface; and when the area of the material is small, a small number of nozzles may be used to blow the material surface, so that blowing distances (horizontal movement distance) of materials of different volumes and different weights may be maintained within a certain range.

In embodiments of the present disclosure, the nozzles are independent of each other, and directions of gases from the nozzles do not intersect with each other, so that each of different materials may be blown by a respective nozzle without being blown by other nozzles, therefore, the movement trajectories of the materials will not be affected and thus the final separating result will not be affected. In the blowing process, the number of the nozzles used for blowing each material may depend on the shape of that material.

For example, the blowing pressure of the first nozzle 11 ranges from 0.5 MPa to 0.75 MPa, and the blowing pressure of the second nozzle 21 ranges from 0.5 MPa to 0.75 MPa. Preferably, the blowing pressure of the first nozzle 11 is the same as the blowing pressure of the second nozzle 21. The length of the first chute 1 ranges from 1.2 m to 2 m, and the width of the first chute 1 ranges from 0.8 m to 1.5 m. The length of the second chute 2 ranges from 1.2 m to 2 m, and the width of the second chute 2 ranges from 0.8 m to 1.5 m. The length of the third chute 3 ranges from 1.2 m to 2 m, and the width the third chute 3 ranges from 0.8 m to 1.5 m. The material distribution device 100 is a horizontal conveyor belt, and the speed of the conveyor belt ranges from 2 m/s to 5 m/s. It should be noted that the blowing pressures, the sizes of the chutes, the speed of the conveyor belt, etc., described above are optimized parameters of the separating system in embodiments of the present disclosure.

In embodiments of the present disclosure, the first blowing valve 10 and the second blowing valve 20 with different elevation angles are provided, so that it is possible to cause the material of the first category that is not blown and is thrown horizontally from the material distribution device 100 to enter the first chute 1, the material of the second category that is blown by the first blowing valve 10 to enter the second chute 2, and the material of the third category that is blown by the second blowing valve to enter the third chute 3. In this way, areas occupied by the chutes may be rationalized, the separating chamber may have a proper structure, the blowing accuracy and the separating accuracy may be improved, the blowing pressure may be proper, the impact force between the material and the chute may be avoided, and the loss may be reduced.

In addition, in the configuration process, as shown in FIG. 7, the material receiving device 400 includes a first partition 31 for forming the first chute 1 and the second chute 2, a second partition 32 for forming the second chute 2 and the third chute 3, and a third partition 33 arranged on a side of the third chute 3. The height of the first partition 31, the height of the second partition 32 and the height of the third partition 33 increase sequentially.

The larger the dimension of the chute, the greater the interception degree to the material. In the present disclosure, the material is separated into the farthest third chute using the second blowing valve 20 with a smaller elevation angle, and the movement trajectory of the material is lower than the movement trajectory of the material blown by the first blowing valve 10. Therefore, the heights of the partitions between the chutes are set to increase sequentially along the movement trajectory of the material.

By adjusting the heights of the partitions for the chutes, it is possible to further control the separating accuracy. For example, for the material of the second category and the second chute corresponding to the material of the second category, when the particle size of the material of the second category varies in a small range, the height of the chute may be adjusted to intercept the flying material of the second category to improve the separating accuracy of the material of the second category. In embodiments of the present disclosure, applicable material particle size ranges from 30 mm to 350 mm. In different embodiments, the separating of materials of different particle sizes is achieved by adjusting the heights of different separating partitions.

In embodiments of the present disclosure, an auxiliary separation device 500 is provided on the chute to guide a material which falls on the auxiliary separation device into the chute. The auxiliary separation device 500 is one of or a combination of more than one selected from a horizontal conveyor belt, an inclined conveyor belt, and a sliding plate arranged at an angle. According to different separating effects, different types of auxiliary separation devices 500 may be used. In the configuration process, a separating effect of an inclined auxiliary separation device 500 is better than a separating effect of a horizontal auxiliary separation device 500.

For example, the auxiliary separation device 500 is an inclined auxiliary separation device. In the case that the auxiliary separation device 500 is arranged on the partition between the chutes, the auxiliary separation device 500 is inclined downward in a direction away from the material distribution device. The auxiliary separation device 500 arranged between the second chute 2 and the third chute 3 is used to guide the material of the third category falling on the auxiliary separation device 500 into the third chute 3 below the auxiliary separation device 500, and an upper end of the auxiliary separation device 500 is used to block the material of the second category from entering the third chute 3. In this embodiment, an orthographic projection of the auxiliary separation device 500 on a horizontal plane partially overlaps with an orthographic projection of the second chute 2 on the horizontal plane, and partially overlaps with an orthographic projection of the third chute 3 on the horizontal plane.

For the chute close to the material distribution device 100, such incline configuration is equivalent to increasing the height of the partition between the chutes, and the back of the overlapping part of the orthographic projections may block the material. For the chute away from the material distribution device 100, such incline configuration is equivalent to increasing the size of that chute, thereby effectively reducing the area occupied by that chute while reducing the blowing strength and increasing the separating accuracy.

In embodiments of the present application, the auxiliary separation device 500 is preferably arranged between the second chute 2 and the third chute 3, which may increase an effective area of the third chute 3 without changing the dimension of the second chute 2 and the dimension of the third chute 3. In addition, by providing the auxiliary separation device 500, the probability of incorrect separating caused by employing different blowing pressures for separating in the related art may be reduced. Due to irregular shapes of minerals, when two minerals of the same mass and composition are blown with the same high-pressure gas, the blowing forces are different due to their different irregular shapes. Therefore, the two minerals may fly in different paths after they are blown, and the probability of incorrect separating of the minerals may increase.

In the case that the auxiliary separation device 500 is an inclined auxiliary separation device, the auxiliary separation device 500 is inclined from top to bottom in a direction from the second chute 2 to the third chute 3. When the material of the third category falls onto the auxiliary separation device 500, it may roll into the third chute 3 due to the inclined surface, as shown in FIG. 7. In addition, the auxiliary separation device 500 above the second chute 2 may prevent the material of the second category that is going to enter the second chute 2 from being mistakenly separated into the third chute 3 using the inclined back.

It should be noted that the auxiliary separation device 500 in the present disclosure may be used to assist in the separating of the material of the second category and the material of the third category. For example, when the blowing force applied to the material of the second category is great, the flying material of the second category may be intercepted by adjusting the back of the auxiliary separation device 500, so as to improve the separating accuracy of the material of the second category; when the blowing force applied to the material of the third category is small, the material may falls onto the front of the auxiliary separation device 500 and is separated into the third chute with assistance from the auxiliary separation device 500, thereby improving the separating accuracy of the material of the third category.

In addition, the dimension of the auxiliary separation device 500 is not limited in embodiments of the present application. In some embodiments, an overlapping area of the orthographic projection of the auxiliary separation device 500 on the horizontal plane and the orthographic projection of the second chute 2 on the horizontal plane is greater than an overlapping area of the orthographic projection of the auxiliary separation device 500 on the horizontal plane and the orthographic projection of the third chute 3 on the horizontal plane. A part of the auxiliary separation device 500 above the second chute 2 is used to block the material of the second category from entering the third chute 3; the front of the auxiliary separation device 500 is used to assist the material of the third category to enter the third chute 3; and in the configuration process, the length of the auxiliary separation device 500, the inclination angle of the auxiliary separation device 500, the overlapping area of the auxiliary separation device 500 described above and the like are adjusted according to the separating particle size, the blowing pressure, etc.

As shown in FIG. 8, the present disclosure further provides a material separation method performed by any one of the above systems. The method includes steps S100 to S300.

In S100, when conveying the material, the first image of the material on the material distribution device 100 is acquired by the X-ray detection module 40, and the second image of the material is acquired by the three-dimensional image acquisition module 50.

In S200, the material category of the material is acquired by the control device 600 based on the first image, the center of mass of the material is acquired based on the first image and the second image, and the time instant at which the material reaches the blowing position corresponding to the separation device is acquired based on the center of mass of the material.

In S300, the separation device 300 blows towards the center of mass of the material so as to achieve material separating, in response to the material falling from the material distribution device to the blowing position corresponding to the separation device 300.

In embodiments of the present disclosure, the control device 600 is further used to perform at least one selected from: acquiring a shape of the material based on the second image; acquiring a density of the material based on the first image, and acquiring the center of mass of the material based on the shape of the material and the density of the material; acquiring the movement trajectory of the material based on the center of mass of the material; acquiring the time instant at which the material reaches the blowing position based on the movement trajectory of the material; sending a time instant to start blowing to the separation device based on the time instant at which the material reaches the blowing position; selecting a blowing valve of the separation device for blowing the material based on the material category of the material; and selecting a nozzle of the blowing valve for blowing the material based on the shape of the material

In the separating process, the blowing valve is selected based on the material category corresponding to the material, and the blowing nozzle is selected based on the shape of the material. For example, the following blowing strategies may be employed for separating, and the blowing strategies include a first blowing strategy, a second blowing strategy, and a third blowing strategy.

In the first blowing strategy, the material is not blown when the material is a material of the first category, so that the material of the first category enters the first chute 1.

In the second blowing strategy, when the material is a material of the second category, the material of the second category is blown by the first blowing valve 10, so that the material of the second category enters the second chute 2.

In the third blowing strategy, when the material is a material of the third category, the material of the third category is blown by the second blowing valve 20, so that the material of the third category enters the third chute 3.

It should be noted that, in embodiments of the present disclosure, the control device is further used to calculate coordinates of the material and time instants at which the material reaches the positions corresponding to the first blowing valve 10 and the second blowing valve 20, and send time instants to start blowing to the first blowing valve 10 and the second blowing valve 20. The control device may be further used to control the number of opened nozzles on the blowing valve based on a calculated particle size or a calculated outer contour size of the material.

In the calculation, the control device acquires a position of the material on the conveyor belt based on image information of the material acquired by the identification device 200, where the position of the material includes a lateral direction position of the material and a longitudinal direction position of the material on the conveyor belt. According to the calculated lateral direction position, a nozzle at a corresponding position may be controlled to open and the number of opened nozzles may be controlled; and according to the calculated longitudinal direction position, the time instant at which the material reaches the blowing position may be acquired so as to control a nozzle corresponding to the material to blow the material.

As shown in FIG. 2, the circle represents the material of the first category, the triangle represents the material of the second category, and the rectangle represents the material of the third category. Materials of first category, second category, and third category are scattered on the conveyor belt. When arriving at the edge of the conveyor belt, the materials all fly out in the horizontal direction at an initial speed the same as the speed of the conveyor belt.

When the material of the first category reaches the blowing position for the first blowing valve 10 and the blowing position for the second blowing valve 20, as the control device identifies that the material is the material of the first category, the first blowing valve 10 and the second blowing valve 20 are not opened, and the material of the first category reaches the first chute 1 along a flight path.

When the material of the second category reaches the blowing position for the first blowing valve 10, the control device controls to start the first blowing valve 10 to blow the surface of the material of the second category. When the material of the second category is subjected to the blowing force, it flies upward and then downward to reach the second chute 2.

When the material of the third category reaches the blowing position for the second blowing valve 20, the control device controls to start the second blowing valve 20 to blow the surface of the material of the third category. When the material of the third category is subjected to the blowing force, it flies upward and then downward to reach the third chute 3.

When two categories of materials (for example, the material of the second category and the material of the third category) are located in the same width direction of the conveyor belt, and when the material of the second category and the material of the third category reaches the blowing positions at the same time, as the first blowing valve 10 and the second blowing valve 20 are also arranged in the width direction of the conveyor belt, the first nozzle 11 corresponding to the material of the second category and the second nozzle 21 corresponding to the material of the third category are opened when the two materials reach the same blowing position.

It should be understood that the orientation or position relationship indicated by terms such as "length", "width", "up", "down", "front", "back", "left", "right", "vertical", "horizontal", "top", "bottom", "inside", and "outside" are based on the orientation or position relationship shown in the accompanying drawings, and are only for the convenience of describing the present disclosure and simplifying the description, and do not indicate or imply that the device or element referred to have to have a specific orientation, be constructed and operated in a specific orientation, and therefore should not be understood as a limitation on the present disclosure.

In addition, the terms "first" and "second" are used for descriptive purposes only and should not be understood as indicating or implying relative importance or implicitly indicating the quantity of the indicated technical features. Therefore, the features defined as "first" or "second" may explicitly or implicitly include one or more of these features. In the description of the present disclosure, the term "a plurality of" means two or more than two, unless otherwise clearly and specifically defined.

Unless otherwise defined, technical and scientific terms used herein have the same meaning as commonly understood by those of ordinary skill in the art to which present disclosure pertains. The terms used herein are used for describing particular implementations only and is not intended to limit the present disclosure. Terms such as "arranged" and the like in the present disclosure may indicate that one component is directly attached to another component or that one component is attached to another component through an intermediate component. Features described herein in one embodiment may be applied to another embodiment alone or in combination with other features, unless the feature is not applicable to the other embodiment or is otherwise stated.

The present disclosure is described with reference to the above embodiments, but it should be understood that the above embodiments are only used for the purpose of example and description, and are not intended to limit the present disclosure to the scope of the described embodiments. Those skilled in the art will understand that more changes and modifications may be made according to the teachings of the present disclosure, and these changes and modifications all fall within the scope of protection claimed by the present disclosure.

## Claims

1. A material separation system, comprising:
a material distribution device configured to convey a material;
an identification device comprising an X-ray detection module and a three-dimensional image acquisition module, the X-ray detection module being configured to acquire a first image of the material on the material distribution device, and the three-dimensional image acquisition module being configured to acquire a second image of the material on the material distribution device;
a control device configured to acquire a material category of the material based on the first image; acquire a center of mass of the material based on the first image and the second image; and acquire a time instant at which the material reaches a blowing position corresponding to a separation device based on the center of mass of the material;
the separation device located downstream of the material distribution device, and configured to blow towards the center of mass of the material at the blowing position so as to achieve material separating; and
a material receiving device configured to accommodate a separated material.

2. The material separation system according to claim 1, wherein the separation device comprises a plurality of blowing valves located below a movement trajectory of the material, and each of the plurality of blowing valves comprises a plurality of nozzles arranged in a width direction of the material distribution device.

3. The material separation system according to claim 2, wherein the control device is further configured to perform at least one selected from:
acquiring a shape of the material based on the second image;
acquiring a density of the material based on the first image, and acquiring the center of mass of the material based on the shape of the material and the density of the material;
acquiring the movement trajectory of the material based on the center of mass of the material;
acquiring the time instant at which the material reaches the blowing position based on the movement trajectory of the material;
sending a time instant to start blowing to the separation device based on the time instant at which the material reaches the blowing position;
selecting a blowing valve of the separation device for blowing the material based on the material category of the material; and
selecting a nozzle of the blowing valve for blowing the material based on the shape of the material.

4. The material separation system according to claim 1, wherein the X-ray detection module and the three-dimensional image acquisition module are arranged in a same width direction of the material distribution device.

5. The material separation system according to claim 1, wherein the X-ray detection module comprises an X-ray emission source arranged above the material distribution device and an X-ray detector arranged below the material distribution device.

6. The material separation system according to claim 1, wherein the three-dimensional image acquisition module comprises two line laser binocular stereo cameras arranged above the material distribution device and in a width direction of the material distribution device.

7. The material separation system according to claim 6, wherein viewing angle coverage regions of the two line laser binocular stereo cameras on the material distribution device partially overlap with each other, and identification regions of the two line laser binocular stereo cameras on the material distribution device do not overlap with each other.

8. The material separation system according to claim 6, wherein a viewing angle range of the line laser binocular stereo camera ranges from 75 ° to 90 °.

9. The material separation system according to claim 1, wherein the separation device comprises a first blowing valve and a second blowing valve, and the first blowing valve and the second blowing valve are configured to separate the material into at least three categories of materials.

10. A material separation method implemented by the material separation system according to any one of claims 1 to 9, the material separation method comprising:
acquiring the first image of the material on the material distribution device by the X-ray detection module, and acquiring the second image of the material by the three-dimensional image acquisition module, when conveying the material;
acquiring, by the control device, the material category of the material based on the first image, acquiring the center of mass of the material based on the first image and the second image, and acquiring the time instant at which the material reaches the blowing position corresponding to the separation device based on the center of mass of the material; and
blowing towards the center of mass of the material by the separation device so as to achieve material separating, in response to the material falling from the material distribution device to the blowing position corresponding to the separation device.
